# EUROPEAN PATENT APPLICATION

(11) **EP 0 745 629 A2**
(43) Date of publication of application: **04.12.1996**
(21) Application number: 96107089.3
(22) Date of filing: 06.05.1996
(51) Int. Cl.: C08G 63/82

(54) **Polyesters with a low crystallization rate and catalytic system for their preparation**

(30) Priority: 01.06.1995 IT MI951142; 21.12.1995 IT MI952702
(71) Applicant: ENICHEM S.p.A., I-20124 Milano (IT)
(72) Inventor: Po', Riccardo, Livorno (IT); Pelosini, Luigi, Fontaneto (NO) (IT); Occhiello, Ernesto, Novara (IT); Romano, Ugo, Vimercate (MI) (IT)
(74) Representative: Gennari, Marco

(57) **Abstract**

A description follows of the preparation of saturated polyesters, in particular poly(ethylene terephthalate), with a slow crystallization rate of the molten state suitable for the production of textile fibres and hollow bodies.

## Description

The present invention relates to polyesters with a low crystallization rate of the molten state and a catalytic system for their polycondensation consisting of a mixture of metals.

Semicrystalline polyesters, in particular, poly (ethylene terephthalate) (PET) but also poly(ethylene 2,6-naphthalenedicarboxylate) (PEN), are often used in fields where crystallization kinetics is important, from the point of view of both process and product.

In the case of textile fibres in fact, the crystallization rate is, together with other factors, particularly important as it limits the rate at which the material is spun. Increasing efforts have been made in recent years in research on polyesters based on PET suitable for high-rate spinning processes (greater than 3000 metres/min), as described for example in Man-Made Fiber Year Book (CTI) 1993 page 25 onwards. With these processes it is possible to considerably increase the productivity of spinning plants. The PET normally used, however, for the production of yarn and staple, is not suitable for use in this type of process, because an increase in the spinning rate leads to a higher number of yarn-breaks, with a consequent interruption in the process and loss of production. The patent EP 202631 discloses that one of the reasons for yarn-break during high-rate spinning lies in the increase in the crystallization rate of the oriented polyester molecules due to the high velocity. The patent proposes a solution to the problem consisting in the use of comonomers together with inert particles of titanium bioxide, with a suitable particle size, and alkaline or earth-alkaline metal salts of carboxylic acids. The use of a comonomer however causes undesired alterations of other properties such as the melting point, glass transition temperature, etc., and it is also a costly solution as it requires the use of significant quantities of comonomer.

In the case of re-usable bottles deriving from rather thick parisons (about 6-7 mm), a low crystallization rate is essential for preserving the transparency.

To limit the crystallization rate of the polyesters, in particular PET, the use of comonomers such as diethyleneglycol, isophthalic acid and cyclohexandimethanol, is known in the art (see patent EP 465060). This method has disadvantages such as introducing an additional component which can reduce the crystallinity or influence the properties such as the mechanical tensile strength.

We have now overcome these problems by preparing polyesters with a slow crystallization rate, suitable for the production of textile fibres and bottles, using a catalytic system consisting of a particular mixture of derivatives of metals which leaves residues in the final polymer in a quantity of less than 150 ppm.

In accordance with this, the present invention relates to a method for the synthesis of polyesters with a slow crystallization rate prepared by the polycondensation of monomers, obtained by esterification of the diacid or alcoholysis of its alkyl esters, the polycondensation being obtained by means of a catalytic system comprising:
- at least one derivative selected from those of antimonium and germanium in such a quantity that the residual metal in the final polymer is between 5 and 149.9 ppm;
- at least one derivative selected from the metals of groups I-Va, I-VIIb, VIII and lanthanides in such a quantity that the residual metal in the final polymer is between 0.1 and 90 ppm;
   the total quantity of metals, expressed as element, being in a quantity of less than 150 ppm in the final polymer.

Among the metals of groups I-Va titanium is particularly preferred.

In another form of embodiment of the same invention the catalytic system optionally comprises
- a sulfonic acid having the general formula

RSO₃H

in such a quantity that the sulfur in the final polymer is between 1 and 40 ppm,
wherein R represents an organic alkyl radical, linear or branched, saturated cyclic or aromatic containing up to 20 carbon atoms.

Also object of the present invention are polyesters obtained with this method and among these poly (ethylene terephthalate) and poly(ethylene 2,6-naphthalenedicarboxylate).

The quantity of compound RSO₃H to be used is such as to provide a polyester containing sulfur expressed as elemental sulfur in quantities of between 1 and 40 ppm, preferably over 20 ppm. Examples of sulfonic acids which can be used for the present invention are benzenesulfonic acid, p-toluenesulfonic acid, naphthalenesulfonic acids, ethanesulfonic acid, propanesulfonic acid, cyclohexanesulfonic acid. P-toluenesulfonic acid is preferred. Instead of acids, corresponding anhydrides, esters, or amides can be used.

The derivative of antimonium (III) can be of various types provided it is soluble. Antimonium oxide or antimonium acetate are preferred. Antimonium glycolate can also be used. The quantity of this derivative to be used is such as to provide a polyester containing antimonium expressed as elemental antimonium in quantities of between 5 and 149.9 ppm.

The derivative of antimonium can be of various types provided it is soluble. Antimonium oxide or antimonium acetate are preferred. Antimonium glycolate can also be used.

The derivatives of germanium can be the oxide or its salts or alcoholates. The quantities of these derivatives to be used are such as to provide a polyester containing metal expressed as elemental antimonium or germanium in quantities of between 5 and 149.9 ppm.

The metal derivatives to be used together with the derivatives of antimonium and germanium can be the salts, oxides or organometallic derivatives of elements of groups I-Va, I-VIIB, VIII and lanthanides. These elements can be particularly used in the form of their oxides, carboxylates (especially acetates), alcoholates (especially glycolates, methylates, ethylates, isopropylates or butylates).

The prepolymer is prepared according to the typical method from a diacid or its methyl ester by means of an esterification or alcoholysis reaction. The catalysts most commonly used for the alcoholysis step are magnesium, cobalt, manganese, zinc, calcium acetates etc. and titanium alcoholates.

In the preparation of PET terephthalic acid is preferred as raw material, instead of the ester. Generally no catalyst is used in this case.

The bis(2-hydroxyethyl)terephthalate is transformed into poly(ethylene terephthalate) at temperatures of 260-290°C and pressures of less than a millibar in the presence of stabilizers and the polycondensation catalysts of the present invention.

The catalytic systems thus conceived have the following characteristics:
- high activity, both during polymerization in the molten state and during polymerization in the solid state;
- absence of extensive secondary reactions, such as the formation of diethylene glycol and acetaldehyde, the generation of undesired colouring in the final material, the formation of chain-end carboxylic groups;
- they contribute to the presence of heavy metals in a quantity of less than 150 ppm
- low cost.

The polymer is characterized through the following parameters.
Metal content defined as ppm of the element in the final polymer, on the basis of the quantity of catalysts weighed and introduced into the reaction mixture. Crystallization temperature (Tcc) determined by differential scanning calorimetry by melting the polymer for 5 min. and cooling at a rate of 10°C/min. It represents a measurement of the crystallization rate and the lower the rate, the lower the temperature will be.

The polymers obtained with the present process all have a low metal content, a very low crystallization temperature and consequently a slow crystallization rate. Thanks to these properties they are particularly suitable for the production of re-usable containers and bottles (for which the low crystallization rate is an essential requisite). In addition, they are particularly suitable for the production of textile fibres as the low metal content reduces the fouling of the die.

The following examples provide a better understanding of the invention but do not limit its scope. Table 1 shows the data relating to the polymers obtained according to examples 6-13.

### Example 1 (comparative)

The following compounds were charged into a 40 litre steel reactor, in an inert atmosphere: 7.8 kg of PET prepolymer, 11.62 kg of terephthalic acid and 6.51 kg of ethylene glycol.
2.92 g of antimonium acetate and 2.19 g of cobalt acetate tetrahydrate in a glycol solution are finally added.

1.89 g of phosphoric acid and 6.88 g of antimonium acetate in glycol solutions are added to the reaction mixture, brought to 230°C and maintained at this temperature until the complete distillation of the water.

The pressure is then reduced to 1.5 Torr and the temperature brought to 285°C, these conditions being maintained for 2 hours and 10 min. and removing the excess ethylene glycol.

After bringing the apparatus back to atmospheric pressure with nitrogen, the polymer is extruded and granulated.

The product obtained is subjected to DSC (differential scanning calorimetry) analysis using a DSC 7 of Perkin Elmer.

A crystallization temperature value in the molten state (T_{cc}) of 191°C is obtained.

### Example 2

7 kg of PET prepolymer, 11.62 kg of terephthalic acid and 6.51 kg of ethylene glycol are charged into a 40 litre steel reactor, in an inert atmosphere. 1.96 g of antimonium acetate, 1.31 g of cobalt acetate tetrahydrate and 0.63 g of dibutyl tin oxide in a glycol solution are added.

2.62 g of trimethyl phosphate and 1.17 g of sodium p-toluenesulfonate, in glycol solutions are added to the reaction mixture, brought to 230°C and maintained at this temperature for about 3 hours until the complete distillation of the water.

The pressure is then reduced to 1.5 Torr and the temperature brought to 285°C, these conditions being maintained for 2 hours and 50 min. and removing the excess ethylene glycol.

After bringing the apparatus back to atmospheric pressure with nitrogen, the polymer is extruded and granulated.

The T_{cc} value obtained is 176°C.

### Example 3

7 kg of PET prepolymer, 11.62 kg of terephthalic acid and 6.51 kg of ethylene glycol are charged into a 40 litre steel reactor, in an inert atmosphere. 2.50 g of antimonium acetate, 2.19 g of cobalt acetate tetrahydrate and 0.93 g of neodymium oxide in a solution of acetic acid and ethylene glycol are added.

2.62 g of trimethyl phosphate in a glycol solution are added to the reaction mixture, brought to 230°C and maintained at this temperature for about 2 hours and 10 min. until the complete distillation of the water.

The pressure is then reduced to 0.9 Torr and the temperature brought to 285°C, these conditions being maintained for 3 hours and 10 min. and removing the excess ethylene glycol.

After bringing the apparatus back to atmospheric pressure with nitrogen, the polymer is extruded and granulated.

The T_{cc} value obtained is 187°C.

### Example 4

7 kg of PET prepolymer, 11.62 kg of terephthalic acid and 6.51 kg of ethylene glycol are charged into a 40 litre steel reactor, in an inert atmosphere. 2.50 g of antimonium acetate, 2.19 g of cobalt acetate tetrahydrate and 1.05 g of dibutyl tin oxide in a glycol solution are added.

2.62 g of trimethyl phosphate in a glycol solution are added to the reaction mixture, brought to 230°C and maintained at this temperature for about 2 hours and 20 min. until the complete distillation of the water.

The pressure is then reduced to 0.9 Torr and the temperature brought to 285°C, these conditions being maintained for 2 hours and 40 min. and removing the excess ethylene glycol.

After bringing the apparatus back to atmospheric pressure with nitrogen, the polymer is extruded and granulated.

The T_{cc} value obtained is 177°C.

### Example 5

7 kg of PET prepolymer, 11.62 kg of therephthalic acid and 6.51 kg of ethylene glycol are charged into a 40 litre steel reactor, in an inert atmosphere.

3.93 g of antimonium acetate, 2.19 g of cobalt acetate tetrahydrate and 0.21 g of dibutyl tin oxide in a glycol solution are added.

1.89 g of phosphoric acid in a glycol solution are added to the reaction mixture, brought to 230°C and maintained at this temperature for about 3 hours and 30 min. until the complete distillation of the water.

The pressure is then reduced to 0.9 Torr and the temperature brought to 285°C, these conditions being maintained for 3 hours and 40 min. and removing the excess ethylene glycol.

After bringing the apparatus back to atmospheric pressure with nitrogen, the polymer is extruded and granulated.

The T_{cc} value obtained is 180°C.

### Example 6

The following products were charged into a 40 litre steel reactor in an inert atmosphere:
19.40 kg (100 moles) of dimethyl terephthalate,
13.64 kg (220 moles) of ethylene glycol;
a glycol solution containing: 0.70 g of manganese acetate tetrahydrate, 3.06 g of magnesium acetate tetrahydrate, 1.25 g of zinc acetate dihydrate, 2.84 g of cobalt acetate tetrahydrate, 1.64 g of sodium benzoate.

The reaction mixture was brought to 180°C and maintained at this temperature for about 4 hours until the complete distillation of the methanol, after which the temperature was brought to 225°C and 0.23 g of titanium tetraisoepoxide, 1.84 g of p-toluenesulfonic acid monohydrate, 1.92 g of antimonium trioxide, 6.30 g of phosphoric acid in a glycol solution, were added.

The pressure was then gradually reduced to 0.6 torr and the temperature was increased to 285°C. After 3 hours and 10 minutes of reaction the apparatus was brought back to atmospheric pressure with N₂ and the polymer was extruded and granulated.

### Example 7

The following products were charged into a 40 litre steel reactor in an inert atmosphere:
11.62 kg (70 moles) of terephthalic acid,
6.51 kg (105 moles) of ethylene glycol;
7.0 kg of PET prepolymer,
a glycol solution containing: 2.19 g of cobalt acetate tetrahydrate, 3.93 g of antimonium acetate, 0.115 g of titanium tetraisopropylate.

The reaction mixture was brought to 230°C and maintained at this temperature for about 4 hours until the complete distillation of the water, after which the temperature was brought to 255°C and 1.90 g of phosphoric acid,
0.92 g of p-toluenesulfonic acid in a glycol solution, were added.

The pressure was then gradually reduced to 0.6 torr and the temperature was increased to 285°C. After 2 hours and 50 minutes of reaction the apparatus was brought back to atmospheric pressure with N₂ and the polymer was extruded and granulated.

### Example 8

The following products were charged into a 40 litre steel reactor in an inert atmosphere:
20.0 kg of PET prepolymer,
2.0 kg of ethylene glycol,
a glycol solution containing:
2.19 g of cobalt acetate tetrahydrate,
3.93 g of antimonium acetate,
a glycol solution containing: 0.115 g of titanium tetraisopropylate, 1.90 g of phosphoric acid, 0.92 g of p-toluenesulfonic acid.

The mixture was gradually brought to 285°C, reducing the pressure to 0.6 torr. After 2 hours and 50 minutes, after removing the excess ethylene glycol, the apparatus was brought back to atmospheric pressure with N₂ and the polymer was extruded and granulated.

### Example 9

The following products were charged into a 40 litre steel reactor in an inert atmosphere:
11.62 kg (70 moles) of terephthalic acid,
6.51 kg (105 moles) of ethylene glycol,
7.0 kg of PET prepolymer,
a glycol solution containing:
2.19 g of cobalt acetate tetrahydrate,
1.97 g of antimonium acetate,
0.115 g of titanium tetraisopropylate.

The reaction mixture was brought to 230°C and maintained at this temperature for about 4 hours until the complete distillation of the water, after which the temperature was brought to 255°C. 1.90 g of phosphoric acid and 0.92 g of p-toluenesulfonic acid in a glycol solution, were added. The pressure was then gradually reduced to 0.6 torr and the temperature was increased to 285°C. After 3 hours and 15 minutes of reaction the apparatus was brought back to atmospheric pressure with N₂ and the polymer was extruded and granulated.

### Example 10

The following products were charged into a 40 litre steel reactor in an inert atmosphere:
11.62 kg (70 moles) of terephthalic acid,
6.51 kg (105 moles) of ethylene glycol,
7.0 kg of PET prepolymer,
a glycol solution containing:
5.0 g of acetic acid,
2.19 g of cobalt acetate tetrahydrate,
1.23 g of antimonium acetate,
0.115 g of titanium tetraisopropylate.

The reaction mixture was brought to 230°C and maintained at this temperature for about 4 hours until the complete distillation of the water, after which the temperature was brought to 260°C. 1.90 g of phosphoric acid and 0.92 g of p-toluenesulfonic acid in a glycol solution, were added. The pressure was then gradually reduced to 0.6 torr and the temperature was increased to 285°C. After 3 hours and 20 minutes of reaction the apparatus was brought back to atmospheric pressure with N₂ and the polymer was extruded and granulated.

### Example 11 (comparative)

19.4 kg (100 moles) of dimethyl terephthalate, 13.64 kg (220 moles) of ethylene glycol were introduced into a 40 litre steel reactor in an inert atmosphere. A glycol solution containing: 0.70 g of manganese acetate tetrahydrate, 3.06 g of magnesium acetate tetrahydrate, 1.25 g of zinc acetate dihydrate, 2.84 g of cobalt acetate tetrahydrate, 1.64 g of sodium benzoate are added.

The reaction mixture was brought to 180°C and maintained at this temperature for about 4 hours until the complete distillation of the water, after which the temperature was brought to 225°C. 3.68 g of antimonium trioxide and 10 g of trimethyl phosphate in a glycol solution, were added. The pressure was then gradually reduced to 0.6 torr and the temperature was increased to 285°C. After 2 hours and 50 minutes of reaction the apparatus was brought back to atmospheric pressure with N₂ and the polymer was extruded and granulated.

The final material was grey-coloured and proved to have high levels of acetaldehyde.

### Example 12 comparative

A polymer is prepared as described in example 11 with the following modifications.
The antimonium trioxide is added in a quantity of 2.76 g and the reaction time was 3 hours and 10 minutes.

The final material was grey-coloured and proved to have high levels of acetaldehyde.

### Example 13 comparative

A polymer is prepared as described in example 11 with the following modifications.
The antimonium trioxide is added in a quantity of 1.84 g and the reaction time was 5 hours.

An extremely fluid polymer was obtained which was difficult to extrude. Evidently 80 ppm of antimonium , if used alone, does not allow a polymeric product to be obtained.

**TABLE 1**

| EX. nr. | IV | DEG % | Tm | Tcc | colour |
|---|---|---|---|---|---|
| 6 | 0.60 | 0.74 | 253 | 189 | colourless |
| 7 | 0.67 | 0.70 | 252 | 183 | colourless |
| 8 | 0.65 | 0.98 | 251 | 186 | colourless |
| 9 | 0.58 | 0.68 | 252 | 179 | colourless |
| 10 | 0.50 | 1.15 | 251 | 178 | colourless |
| 11 | 0.66 | 0.74 | 252 | 195 | grey |
| 12 | 0.50 | 0.51 | 255 | 206 | grey |
| 13 | 0.30 | n.d. | 256 | 209 | colourless |
| n.d. not determined | | | | | |

## Claims

1. Colourless polyesters with a slow crystallization rate, which can be used for the production of finished products, prepared by the polycondensation of monomers obtained by the esterification of the diacid or alcoholysis of its alkyl esters.

2. Catalytic system for the preparation of polyesters according to claim 1 comprising:
- at least one derivative selected from those of antimonium and germanium in such a quantity that the residual metal in the final polymer is between 5 and 149.9 ppm;
- at least one derivative selected from the metals of groups I-Va, I-VIIb, VIII and lanthanides in such a quantity that the residual metal in the final polymer is between 0.1 and 90 ppm; the total quantity of metals, expressed as element, being in a quantity of less than 150 ppm in the final polymer.

3. Catalytic system according to claim 2 characterized in that the derivative selected from metals of IV B is titanium in such a quantity that the residual titanium in the final polymer is between 0.1 and 4 ppm.

4. Catalytic system according to claim 2 characterized in that the composition additionally comprises:
- a sulfonic acid having the general formula
RSO₃H
in such a quantity that the sulfur in the final polymer is between 1 and 40 ppm,
wherein R represents an organic alkyl radical, linear or branched, saturated cyclic or aromatic containing up to 20 carbon atoms.

5. Catalytic system according to claim 4 characterized in that the sulfur in the final polymer is between 1 and 20 ppm.

6. Catalytic system according to claim 4 characterized in that the sulfonic acid is an aromatic sulfonic acid.

7. Catalytic system according to claim 4 characterized in that the aromatic sulfonic acid is p-toluenesulfonic acid.

8. Catalytic system according to claim 2 characterized in that the derivative of antimonium or germanium is an oxide.

9. Catalytic system according to claim 2 characterized in that the derivative of antimonium is an acetate.

10. Catalytic system according to claim 2 characterized in that the derivative of antimonium or germanium are alcoholates.

11. Catalytic system according to claim 10 characterized in that the alcoholates are glycolates.

12. Catalytic system according to claim 2 characterized in that the derivative of titanium is an alcoholate.

13. Catalytic system according to claim 3 characterized in that the derivatives of titanium are added to the composition in a solution of ethylene glycol containing a carboxylic acid.

14. Polymer according to claims 1-13 characterized in that the polyester is poly(ethylene 2,6-naphthalenedicarboxylate).

15. Use of the polyester according to claims 1-15 to obtain polyester fibres suitable for spinning at a particularly high rate.

16. Use of the polyester according to claims 1-15 to obtain reusable hollow bodies and bottles.
